# EUROPEAN PATENT APPLICATION

(11) **EP 4 521 196 A1**
(43) Date of publication of application: **12.03.2025**
(21) Application number: 24199036.5
(22) Date of filing: 06.09.2024
(51) Int. Cl.: G06F 1/26, F15B 19/00, G01N 3/06, G01N 3/10, G06F 1/28

(54) **DUAL ELECTRICAL POWER SUPPLIES FOR A HYDRAULIC ACTUATOR SYSTEM**

(30) Priority: 08.09.2023 US 202363581476 P
(71) Applicant: Illinois Tool Works Inc., Glenview IL 60025 (US)
(72) Inventor: PLANT, Jonathan, Glenview, 60025 (US); ANDERSON, Bruce, Glenview, 60025 (US); CARLSON, Kevin, Glenview, 60025 (US)
(74) Representative: HGF

(57) **Abstract**

A power and signal distribution hub for providing power and operating signals to a plurality of channels of a testing system for operating one or more hydraulic actuators to apply loads to a test article is provided. The power and signal distribution hub includes a first power supply and a second power supply, connected to load share power to the testing system, the first power supply and the second power supply configured to distribute electrical power to the plurality of channels of the testing system. A monitoring circuit for each power supply configured to monitor operation of its respective power supply, and to provide a signal indicative of operation of its power supply outside of normal operation parameters of the power supply.

## Description

### CROSS-REFERENCE TO RELATED APPLICATION

This application claims the benefit of priority from U.S. Provisional Patent Application No. 63/581,476 filed September 8, 2023 for "DUAL ELECTRICAL POWER SUPPLIES FOR A HYDRAULIC ACTUATOR SYSTEM," the content of which is hereby incorporated by reference in its entirety.

### BACKGROUND

The discussion below is merely provided for general back-ground information and is not intended to be used as an aid in determining the scope of the claimed subject matter.

In testing systems, test articles under test are very expensive, and it is necessary to quickly and effectively reduce loading on the test article in certain situations so as to prevent damage to the test article. Testing system power supply operation outside of normal operating parameters can cause non-representative unloading and damage to test articles.

### SUMMARY

This Summary and the Abstract herein are provided to introduce a selection of concepts in a simplified form that are further described below in the Detailed Description. This Summary and the Abstract are not intended to identify key features or essential features of the claimed subject matter, nor are they intended to be used as an aid in deter-mining the scope of the claimed subject matter. The claimed subject matter is not limited to implementations that solve any or all disadvantages noted in the Background.

In one aspect, a power and signal distribution hub for providing power and operating signals to a plurality of channels of a testing system for operating one or more hydraulic actuators to apply loads to a test article is provided. The power and signal distribution hub includes a first power supply and a second power supply, connected to share power load of the testing system, the first power supply and the second power supply configured to distribute electrical power to the plurality of channels of the testing system. A monitoring circuit for each power supply is configured to monitor operation of its respective power supply, and to provide a signal indicative of operation of its power supply outside of normal operation parameters of the power supply when detected.

Implementations may include one or more of the following features. Each monitoring circuit may include a plurality of relays coupled to its power supply. The shared power load can be assumed by the first power supply upon failure of the second power supply. Both the first power supply and the second power supply can be used to provide power for inrush current at startup of the testing system, and where in normal operation, a single power supply of the first power supply and the second power supply is capable of providing power for the testing system. Each of the power supplies can be electrically coupled to a solenoid for each channel, to a valve for each channel, and to control logic for each channel. The power and signal distribution hub can be configured to provide a signal indicative of failure of the first power supply to an external controller, and to receive instruction signals from the external controller to perform a controlled unload of a load on the test article in the testing system from each actuator, using the second power supply. The power and signal distribution hub can be configured to receive feedback signals for status of the controlled unload of the loads on the test article, and to provide a status signal of the controlled unload to the external controller. The power and signal distribution hub can be configured to receive an interlock unload signal from the external controller in the event the controlled unload fails, and to provide interlock unload power to each valve, solenoid, and control logic for each associated actuator of the testing system for an interlock unload of the load on the test article from each actuator.

In another aspect, a method of signal and power distribution to channels of a testing system for operating one or more hydraulic actuators to apply loads to a test article includes providing power to the channels of the testing system with a pair of power supplies connected to load share power provided to the testing system. The power supplies are monitored for proper operation. A signal indicative of operation of a power supply of the pair of power supplies outside of proper operation is provided when detected.

Implementations of the method may include one or more of the following features. Monitoring can be performed by a monitoring circuit for each power supply of the pair of power supplies, each monitoring circuit configured to monitor operation of its respective power supply, each monitoring circuit having a plurality of relays coupled to its power supply. The method may include a working power supply of the pair of power supplies assuming the shared load in the event of failure of an other of the pair of power supplies. Providing power further may include providing power to a solenoid for each channel, to a valve for each channel, and to control logic for each channel. Providing the signal indicative of failure of the power supply of the pair of power supplies may include providing the signal indicative of failure of the power supply of the pair of power supplies to an external controller. The method may include receiving instruction signals from the external controller to initiate a controlled unload of a load on a test article in the testing system. The method may include: providing a status signal of the controlled unload to the external controller. The method may include: receiving an interlock unload signal from the external controller when the controlled unload fails; and providing interlock unload power to valves for actuators of the testing system for an interlock unload of the load on the test article from each actuator.

This summary is not intended to describe each disclosed embodiment or every implementation of power and signal distribution hubs as described herein. Many other novel advantages, features, and relationships will become apparent as this description proceeds. The figures and the description that follow more particularly exemplify illustrative embodiments.

### BRIEF DESCRIPTION OF THE DRAWINGS

FIG. 1 is a block diagram of a power and signal distribution hub system according to an embodiment of the present disclosure;
FIG. 2 is block diagram of an operating environment on which embodiments of the present disclosure may be utilized; and
FIG. 3 is a flow chart diagram of a method according to an embodiment of the present disclosure.

### DETAILED DESCRIPTION OF ILLUSTRATIVE EMBODIMENTS

Embodiments of the present disclosure provide a reliable power source that includes redundant power supplies suitable to mitigate a single power supply failure which otherwise could place a control system for the testing system in a poor condition that could cause damage to test articles.

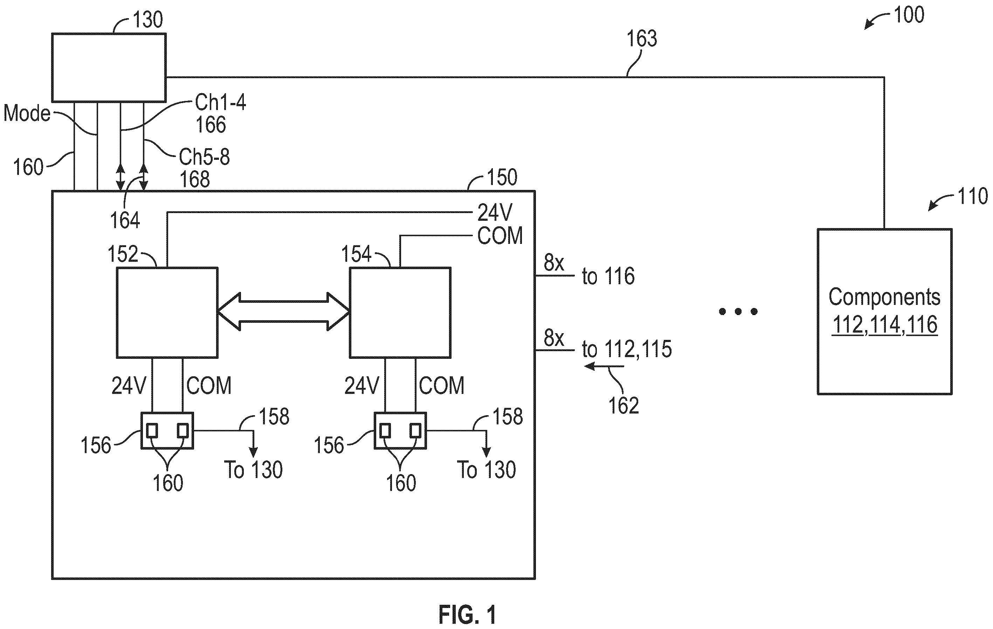

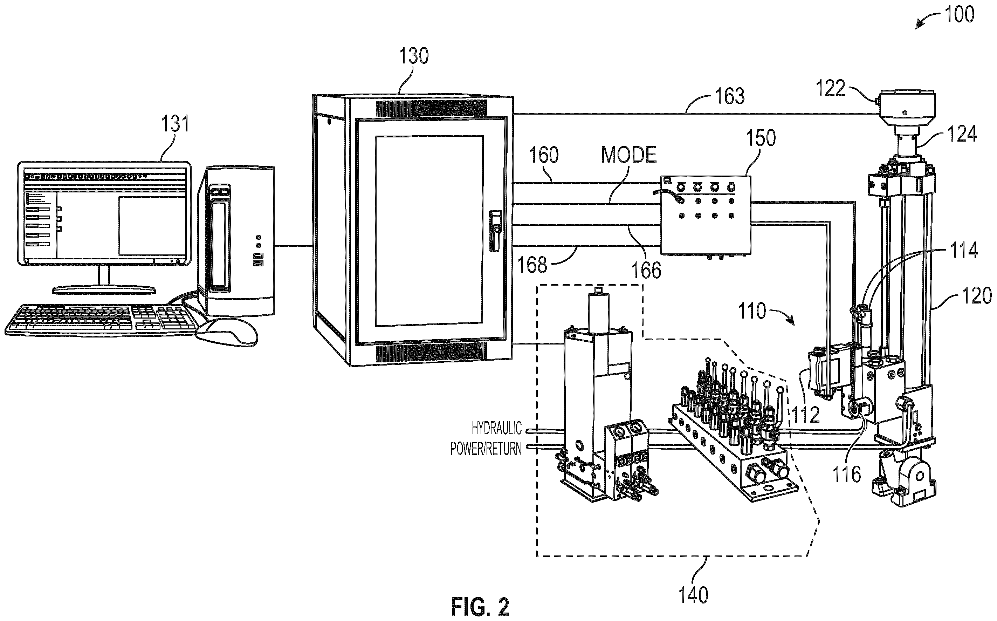

A power and signal distribution hub 150 is shown in FIG. 1. Power and signal distribution hub 150 is configured to provide power and operating signals to a plurality of channels of a testing system 100 (FIG. 2) for operating one or more, typically a plurality of, hydraulic actuators to apply loads to a test article. In one embodiment, power and signal distribution hub 150 comprises a first power supply 152 and a second power supply 154. The power supplies 152 and 154 are connected to load share power to the testing system 100. The first power supply 152 and the second power supply 154 are configured to distribute electrical power to the plurality of channels of the testing system 100. In one embodiment, power and signal distribution hub 150 provides power for eight channels of a testing system, although this should not be considered limiting.

In one embodiment, a single power supply of the two power supplies is sufficient to supply full power to operate the testing system 100.

A monitoring circuit 156 for each power supply 152, 154 is configured to monitor operation of its respective power supply. Each monitoring circuit 156 provides a signal 158 indicative of operation of its power supply outside of normal operation parameters of its power supply. In one embodiment, the signal 158 indicates failure of its respective power supply. Each monitoring circuit 156 comprises in one embodiment a plurality of relays 160 coupled to its power supply. The relays 160 are solid-state switching devices in one embodiment. Further, visual indicators of status of the power supply may be provided.

In one operating state under normal operation of the testing system 100, the total power load used by the testing system 100 for control of the one or more actuators is shared between the power supplies 152 and 154, where the output terminals of the power supplies 152 and 154 are connected in parallel. Upon detection by a monitoring circuit 156 of operation of a power supply of the pair of power supplies outside its normal operating parameters, the full or total load is assumed by the power supply that is not outside of its normal operating parameters. For instance, the shared load is assumed by the first power supply 152 upon failure or other operating conditions make that predetermined operating conditions of the second power supply 154, or vice versa. Normal operating parameters of a power supply may be set or provided in any number of ways without departing from the scope of the disclosure. In one embodiment, the detection by monitoring circuits 156 is of complete failure of its power supply. This is a configuration that is likely to be employed in a power and signal distribution hub for operation in a testing system. However in another embodiment, the monitoring circuit 156 can detect a parameter (such as but not limited to voltage, current, temperature, etc.) outside its normal operating state that could initiate assumption of the total power load of the other power supply.

Each of the power supplies 152, 154 is electrically coupled to a plurality of channels of the testing system 100 in one embodiment. The number of channels in one embodiment is eight, although it should be understood that a greater or lesser number of channels may be employed without departing from the scope of the disclosure. In one embodiment, a solenoid for each channel, a valve for each channel, and control logic for each channel are provided power by the power and signal distribution hub 150, which obtained its power from the power supplies 152 and 154. A single power supply of the power supplies 152, 154 is sufficient in one embodiment to electrically power all channels, and all solenoids, valves, and control logic for each channel, that are coupled to the power and signal distribution hub 150.

The power and signal distribution hub 150 is configured to provide the signal 158 indicative of operation outside of normal operation parameters of a first power supply 152 or second power supply 154 to an external controller 130 via communication link 160, and to receive instruction signals also via communication link 160 from the external controller 130 to perform a controlled unload of the load on the test article in the testing system 100 from each actuator of the testing system 100, using the second power supply 154 or the first power supply 152, respectively, in the event of failure of one of the power supplies 152, 154. The controlled unload operating state is when the controller 130 can provide command signals to each of the valves of each associated actuator to reduce the load provided by actuator.

The power and signal distribution hub 150 is further configured in one embodiment to receive feedback signals 162 (one of which is indicated in FIG. 2) on the channels of the testing system 100. The feedback signals 162 can be from such as but not limited to load cells, displacement sensors, hydraulic pressure sensors, other contact sensors or the like. Of particular importance are those feedback sensors indicative of loads on the test article such as load cells directly measuring the load being imparted by an actuator, or hydraulic pressure signals indicative of the load being imparted by the actuator. Such feedback signals 162 particularly indicate status of the controlled unload of the loads on the test article.

The power and signal distribution hub 150 is further configured to provide status signals 164 of the controlled unload to the external controller 130, in one embodiment on channel communication lines 166 and 168, a channel communication line for four channels in one embodiment. In the event the controlled unload is unsuccessful, one or more the status signals 164 may trigger the system controller 130 to issue an interlock unload signal on communication line 160 that in turn results in interlock command signals being provided to each valve of each actuator. When an interlock command signal is received by each valve, the valve controls the associated actuator to reduce to the differential load imparted upon the test article by the actuator. In contrast to the controlled unload operating state where the controller 130 continues to provide command signals to each valve to reduce the differential load imparted by each associated actuator, when the interlock command signal is issued each valve of each actuator will operate the actuator to reduce the differential load without further command signals from the controller 130. In such a situation, interlock unload power is supplied by the working power supply to each valve, solenoid, and control logic for each associated valve of each actuator of the testing system 100 for the channels connected to the power and signal distribution hub 150. Operation of the controller 130 and in particular operation of the each of the valves for the actuators is described in copending provisional patent application entitled "CONTROLLED LOAD ABORT IN AN ACTUATOR SYSTEM", having serial no. 63/581,465 and filed on September 8, 2023, the contents of which are incorporated herein by reference in its entirety.

In one embodiment, both the first power supply and the second power supply are used to provide power for inrush current at startup of the testing system 100. In startup operation, the startup or inrush current may exceed the power available from a single power supply 152 or 154. In one embodiment, in normal operation after the initial inrush current is used, a single power supply being the first power supply 152 or the second power supply 154 is capable of providing full power for all channels of the testing system during normal operation, the controlled unload state, or the interlock unload state. A failure of one of the power supplies 152, 154 at startup will be detected by its monitoring circuit 156, so a failure at startup will not be detrimental to a test article.

In one embodiment, the two or more power supplies 152, 154 are coupled to a main power supply such as utility power, line power, mains electric, or the like. However, one or more of the power supplies 152, 154 may in one embodiment be batteries or other power supplies (battery, gas engine, or the like) depending on the testing system that is being operated with the power and signal distribution hub.

Further, where two power supplies are mentioned and discussed, it should be understood that that means two or more. That is, more than two power supplies may be used in the same manner without departing from the scope of the disclosure. In one embodiment, each power and signal distribution hub, if more than one is present, has sufficient power to supply startup and normal operation power for eight channels. It should be understood that each power and signal distribution hub includes output cards or modules, where each card or module has a plurality of channels such as for example eight channels and that the power and signal distribution hub can have more than one or more output cards or modules. Power and signal distribution hubs are further connectable together, such as in a daisy chain manner, in order to operate a testing system where additional channels (beyond the capability of a single power and signal distribution hub) are needed. For example, in one embodiment additional power and signal distribution hubs may be chained up to 250 channels or more. In such a chain, one or more power and signal distribution hubs may be provided power by a pair of first and second power supplies; however, in another embodiment, each power and signal distribution hub 150 can have its own pair of first and second power supplies 152, 154. In either situation, the system controller 130 operates to receive signals from each power supply present and controls each power and signal distribution hub 150. In such a configuration, a power supply failure in any of the chained power and signal distribution hubs is detected, which triggers the system controller 130 to perform a controlled unload (or an interlock unload if a controlled unload does not work) of loads on the test article using the available power supply of the power and signal distribution hub that is still in operation as well as typically to perform a controlled unload of loads associated with power and signal distribution hubs that may be being supplied power from two power supplies. Because the test article may be very valuable, it is important that it not be damaged. Hence, being able to command the actuators imparting loads upon the test article to an unloaded or at least reduced load state is important. Using embodiments of the present disclosure, this is obtainable because a second power supply is provided in the event of a power supply failure, the second power supply being fully capable of providing power to the power and signal distribution hub(s) 150 to operate the values of each actuator and achieve desired unloading upon the test article.

A representative operating environment for embodiments of the power and signal distribution hub 150 is shown in greater detail in FIG. 2. FIG. 2 illustrates the system 100 for monitoring and unloading a load on a test article, and includes power and signal distribution hub 150. System 100 comprises in one embodiment a hydraulic assembly 110 and the system controller 130. Hydraulic assembly 110 comprises in one embodiment a control valve 112 configured to control loads in a hydraulic actuator 120 coupled to the test article. Hydraulic assembly 110 further comprises a pair of pressure transducers 114 which are configured to detect and transmit pressures in each associated hydraulic actuator 120. An isolation valve 116 is provided to selectively isolate the control valve 112 from a hydraulic source 140 of hydraulic pressure for each associated hydraulic actuator 120. In such a case, the control valve 112 can then locally reduce the load of the actuator 120 upon the test article pursuant to instructions executed by a local processor in the control valve without further direction from the system controller 130 in the interlock unload operating state.

The system controller 130 in one embodiment is configured to determine a load differential in at least one of a calculated load at the control valve 112 for a hydraulic actuator 120 of the testing system 100 and a calculated load on a load cell 122 coupled to the hydraulic actuator. In a first method to unload the load on the test article by each actuator connected thereto, the system controller 130 is further configured to initiate the controlled unload of the load on the test article via the system controller 130 when the determined load differential reaches a first level. This controlled unload is done during a flow mode of the system, that is, when hydraulic source 140 is coupled to the system 100 and valve operation of each control valve 112 is controlled by the system controller 130. This first level may be referred to as a stop level. Should the stop level controlled unload not work, the controller 130 is further configured to perform the interlock unload of the load on the test article via commands sent to each control valve 112 of each actuator 120 needed to unload the loads on the test article when the determined differential load reaches a second level, higher than the first level, at which point a valve controlled unload, or interlock unload, is used to unload the load on the test article.

In one embodiment, the control valve 112 further comprises a local valve controller 113 to receive the pressures from the pressure transducers 114, and valve firmware 115 operable by the local controller 113 and configured to reduce differential load on a piston of the hydraulic actuator 120. The unloading of the load of the actuator by execution of the firmware 115 by the local valve controller 113 to control operation of its associated actuator 120, in one embodiment, is performed without further input from the system controller 130.

System controller 130 is in one embodiment an external controller that runs software for operating the testing system 100 based on a testing procedure in a system computer 131 that provides a user interface to a user for configuration, operation and monitoring of the testing of the test article.

In the testing system 100, multiple control valves 112 may be connected to multiple hydraulic actuators 120 that provide load to various positions or portions of a test article. For example, a series of eight hydraulic actuators 120 may be controlled by eight hydraulic assemblies. A load cell 122 of each hydraulic actuator 120 is configured to provide load signals 163to the system controller 130. The pressure sensors 114 and the control valve 112 are also configured to provide load signals 162 to the system controller 130. An isolation valve 116 is typically provided for each control valve 120. The system controller 130 controls operation of each isolation valve 116 and control valve 112 under "flow mode" when the test article is under test pursuant to a desired testing procedure, i.e. normal operation.

The system 100 in one embodiment further comprises the power and signal distribution hub 150 coupled between the system controller 130 and the hydraulic assembly 110.

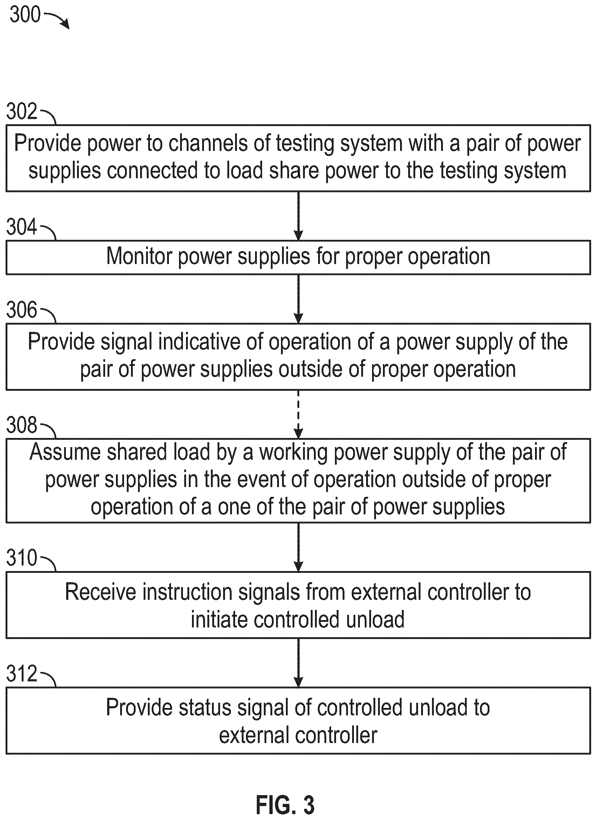

A method 300 of signal and power distribution to channels of a testing system for operating one or more hydraulic actuators to apply loads to a test article is shown in flow chart form in FIG. 3. Method 300 comprises in one embodiment providing power to channels of the testing system with a pair of power supplies connected to load share power provided by the testing system in block 302. The power supplies 152, 154 are monitored for proper operation in block 304, and a signal indicative of operation of a power supply of the pair of power supplies 152, 154 outside of its proper operation is provided in block 306. Monitoring is performed in one embodiment by a monitoring circuit for each power supply of the power of power supplies. Each monitoring circuit is configured to monitor operation of its respective power supply. Each monitoring circuit in one embodiment has a plurality of relays configured to perform the monitoring. In such an embodiment, current flow from the respective power supply is monitored, and an interruption of the current flow trips the relay to turn off. This is indicative of power supply operation outside of normal operation parameters, which triggers the signal 158. Proper operation, as described elsewhere, may include operation outside of a predetermined set of parameters, full or partial failure of the power supply, or the like.

A working power supply of the pair of power supplies assumes the shared load in the event of failure or operation of the other power supply of the pair of power supplies outside of its normal operating parameters in block 308.

Providing power as shown in block 302 further comprises in one embodiment providing power to eight channels coupled to the power and signal distribution hub 150, and includes providing power to a solenoid, to a valve, and to control logic for each channel.

Providing the signal indicative of operation of a power supply outside of its normal operating parameters comprises in one embodiment providing the signal to the external controller 130. In one embodiment, the method 300 further comprises receiving instruction signals from the external controller 130 to initiate the controlled unload of a load on a test article in the testing system 100 in optional block 310. The method may also further comprise providing a status signal of the controlled unload to the external controller 130 in optional block 312. The method may also further comprise receiving the interlock unload signal from the external controller 130, and providing interlock on load power to valves for actuators 120 of the testing system 100 for an interlock unload on the load of the test article from each actuator 120. Such an interlock unload signal is provided in one embodiment in response to feedback indicating that the controlled unload is not properly relieving the load on the test article in the testing system 100. In one embodiment, the controlled unload is ordered by the system controller 130 when load differential reaches a first, stop, level, and interlock unload is ordered when a second, higher, interlock load differential is reached.

It should be noted that the same reference numerals are used in different Figures for same or similar elements. It should also be understood that the terminology used herein is for the purpose of describing embodiments, and the terminology is not intended to be limiting. Unless indicated otherwise, ordinal numbers (e.g., first, second, third, etc.) are used to distinguish or identify different elements or steps in a group of elements or steps, and do not supply a serial or numerical limitation on the elements or steps of the embodiments thereof. For example, "first," "second," and "third" elements or steps need not necessarily appear in that order, and the embodiments thereof need not necessarily be limited to three elements or steps. It should also be understood that, unless indicated otherwise, any labels such as "left," "right," "front," "back," "top," "bottom," "forward," "reverse," "clockwise," "counter clockwise," "up," "down," or other similar terms such as "upper," "lower," "aft," "fore," "vertical," "horizontal," "proximal," "distal," "intermediate" and the like are used for convenience and are not intended to imply, for example, any particular fixed location, orientation, or direction. Instead, such labels are used to reflect, for example, relative location, orientation, or directions. It should also be understood that the singular forms of "a," "an," and "the" include plural references unless the context clearly dictates otherwise.

Embodiments of the present disclosure therefore provide methods and systems for providing a dual power supply with shared load that serves to mitigate a single power supply failure and provide protection for a test article undergoing a test in a testing system.

The above-disclosed subject matter is to be considered illustrative, and not restrictive, and the appended claims are intended to cover all such modifications, enhancements, and other embodiments, which fall within the true scope of the present disclosure. Thus, to the maximum extent allowed by law, the scope of the present disclosure is to be determined by the broadest permissible interpretation of the following claims and their equivalents, and shall not be restricted or limited by the foregoing detailed description.

## Claims

1. A power and signal distribution hub for providing power and operating signals to a plurality of channels of a testing system for operating one or more hydraulic actuators to apply loads to a test article, comprising:
a first power supply and a second power supply, connected to share power load of the testing system, the first power supply and the second power supply configured to distribute electrical power to the plurality of channels of the testing system; and
a monitoring circuit for each power supply configured to monitor operation of its respective power supply, and to provide a signal indicative of operation of its power supply outside of normal operation parameters of the power supply when detected.

2. The power and signal distribution hub any of the preceding claims, wherein each monitoring circuit comprises a plurality of relays coupled to its power supply.

3. The power and signal distribution hub any of the preceding claims, wherein the shared power load is assumed by the first power supply upon failure of the second power supply.

4. The power and signal distribution hub any of the preceding claims, wherein both the first power supply and the second power supply are used to provide power for inrush current at startup of the testing system, and wherein in normal operation, a single power supply of the first power supply and the second power supply is capable of providing power for the testing system.

5. The power and signal distribution hub any of the preceding claims, wherein each of the power supplies is electrically coupled to a solenoid for each channel, to a valve for each channel, and to control logic for each channel.

6. The power and signal distribution hub any of the preceding claims, wherein the power and signal distribution hub is configured to provide a signal indicative of failure of the first power supply to an external controller, and to receive instruction signals from the external controller to perform a controlled unload of a load on the test article in the testing system from each actuator, using the second power supply.

7. The power and signal distribution hub any of the preceding claims, wherein the power and signal distribution hub is configured to receive feedback signals for status of the controlled unload of the loads on the test article, and to provide a status signal of the controlled unload to the external controller.

8. The power and signal distribution hub any of the preceding claims, wherein the power and signal distribution hub is configured to receive an interlock unload signal from the external controller in the event the controlled unload fails, and to provide interlock unload power to each valve, solenoid, and control logic for each associated actuator of the testing system for an interlock unload of the load on the test article from each actuator.

9. A method of signal and power distribution to channels of a testing system for operating one or more hydraulic actuators to apply loads to a test article, comprising:
providing power to the channels of the testing system with a pair of power supplies connected to load share power provided to the testing system;
monitoring the power supplies for proper operation; and
providing a signal indicative of operation of a power supply of the pair of power supplies outside of proper operation when detected.

10. The method of claim 9, wherein monitoring is performed by a monitoring circuit for each power supply of the pair of power supplies, each monitoring circuit configured to monitor operation of its respective power supply, each monitoring circuit having a plurality of relays coupled to its power supply.

11. The method any of claims 9 - 10, and further comprising a working power supply of the pair of power supplies assuming the shared load in the event of failure of an other of the pair of power supplies.

12. The method any of claims 9 - 11, wherein providing power further comprises providing power to a solenoid for each channel, to a valve for each channel, and to control logic for each channel.

13. The method any of claims 9 - 12, wherein providing the signal indicative of failure of the power supply of the pair of power supplies comprises providing the signal indicative of failure of the power supply of the pair of power supplies to an external controller.

14. The method any of claims 9 - 13, and further comprising receiving instruction signals from the external controller to initiate a controlled unload of a load on a test article in the testing system.

15. The method any of claims 9 - 14, and further comprising:
providing a status signal of the controlled unload to the external controller; and/or
receiving an interlock unload signal from the external controller when the controlled unload fails; and/or
providing interlock unload power to valves for actuators of the testing system for an interlock unload of the load on the test article from each actuator.
